# EUROPÄISCHE PATENTSCHRIFT

(11) **EP 3 212 433 B1**
(45) Veröffentlichungstag und Bekanntmachung des Hinweises auf die Patenterteilung: **21.07.2021**
(21) Anmeldenummer: 15797007.0
(22) Anmeldetag: 27.10.2015
(51) Int. Cl.: B60B 3/04, B60B 23/08

(54) **FAHRZEUGRAD MIT EINER VERBINDUNG ZWISCHEN EINER RADFELGE UND EINER RADSCHEIBE UND VERFAHREN ZU DESSEN HERSTELLUNG**
VEHICLE WHEEL HAVING A CONNECTION BETWEEN A WHEEL RIM AND A WHEEL DISC AND METHOD FOR THE PRODUCTION THEREOF
ROUE DE VÉHICULE COMPORTANT UN RACCORDEMENT ENTRE UNE JANTE ET UN DISQUE DE ROUE ET SON PROCÉDÉ DE FABRICATION

(30) Priorität: 27.10.2014 DE 102014115591; 27.10.2014 DE 102014115593
(43) Veröffentlichungstag der Anmeldung: 06.09.2017
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); HEILMANN, Christian, 01127 Dresden (DE); FRANKE, Florian, 01127 Dresden (DE)
(74) Vertreter: Kilchert, Jochen
(86) Internationale Anmeldenummer: PCT/DE2015/100452
(87) Internationale Veröffentlichungsnummer: WO 2016/066161

(56) Entgegenhaltungen:
- WO-A1-2010/067383
- GB-A- 684 821
- US-A- 1 802 773
- US-A- 1 971 604
- US-A- 2 805 894
- US-A1- 2004 227 392

## Beschreibung

Die Erfindung betrifft ein Fahrzeugrad mit einer Radfelge und einer an einer Felgeninnenseite der Radfelge angeschlossenen Radscheibe, wobei die Radscheibe mittels wenigstens eines Verbindungselements mit der Radfelge verbunden ist, welches durch ein Durchgangsloch des Felgenbetts geführt und in der Radscheibe eingefügt ist. Ein derartiges Fahrzeugrad ist beispielsweise aus US 2004/0227392 A1 bekannt.

Die Erfindung betrifft auch ein Verfahren zur Herstellung des Fahrzeugrades mit einer derartigen Verbindung zwischen der Radfelge und der Radscheibe des Fahrzeugrads.

Das Fahrzeugrad wird für motorisierte Fahrzeuge aller Art, insbesondere als Leichtbau-Fahrzeugrad für Personenkraftfahrzeuge und Motorräder angewandt.

Die Radscheibe kann als Radstern mit Speichen (Speichenrad) oder als weitestgehend geschlossenflächige Radschüssel ausgebildet sein.

Eine Vorrichtung dieser Art ist aus der Druckschrift US 2004/0021365 A1 bekannt. Bei diesem Fahrzeugrad ist eine sternförmige Radscheibe (Radstern, Speicheneinheit) mittels Blindnieten oder mehrerer Schraubbolzen mit der Radfelge verbunden. Die Verbindungselemente führen von der Feigenaußenseite der Radfelge her durch jeweils ein Durchgangsloch im Tiefbett des Felgenbetts und sind mit der felgeninnenseitig anliegenden Speicheneinheit vernietet bzw. verschraubt.

Die Radscheibe stützt sich an der Felgeninnenseite der Radfelge gegen das Tiefbett des Felgenbetts ab.

Eine Vorrichtung dieser Art ist auch aus der Druckschrift EP 1 858 715 B1 bekannt. Bei diesem Fahrzeugrad ist eine sternförmige Radscheibe (Radstern) mittels mehrerer Verbindungselemente, die Schrauben oder Nieten sein können und durch jeweils ein Durchgangsloch im Felgenbett führen, mit der Radfelge verbunden. Die Verbindungselemente sind von der Felgenaußenseite der Radfelge aus in den Radstern geschraubt oder genietet. Die Verbindungen sind im Tiefbett des Felgenbetts bzw. im Übergang vom Tiefbett zur Felgenschulter (Hump) des Felgenbetts ausgebildet, wobei die Radscheibe an der Felgeninnenseite der Radfelge im Bereich des Tiefbetts bzw. im Übergang vom Tiefbett zum Hump an das Felgenbett angeschlossen ist.

Die an den genannten Radkonstruktionen im Betrieb des Rades auftretenden Kräfte werden vom einem im Reifensitz der Radfelge sitzenden Reifen über das Felgenbett, insbesondere über das Tiefbett des Felgenbetts, und weiter über die Verbindungselemente auf die Radscheibe und nachfolgend auf die Radnabe übertragen.

Die komplexen, ständig veränderlich Betriebslasten am Fahrzeugrad werden u. a. von der statischen Radlast nach Kfz-Art und Zuladung, vom Fahrbahnprofil, vom Fahrverhalten durch Bremsen und Beschleunigen, von Temperatureinflüssen sowie von außergewöhnlichen Einwirkungen, wie Schlaglöcher und Borsteinanfahrt, erzeugt und erfordern zur Gewährleistung einer sicheren Radkonstruktion Verbindungselemente, die zur Übertragung der hohen Kräfte eine entsprechende Wirklänge bzw. Fügelänge und/oder einen entsprechenden Wirkquerschnitt bzw. Fügequerschnitt aufweisen.

Bei den bekannten Radkonstruktionen steht im Bereich des Tiefbetts für einen radialen Anschluss der Radscheibe und für die Längenerstreckung und Querschnittsausbildung der für die Verbindung zwischen der Radfelge und der Radscheibe vorgesehenen Verbindungselemente nur wenig Platz zur Verfügung. Meistenfalls ist im Inneren der Radfelge eine Bremsanlage auf der Radnabe installiert, auf der auch die Radscheibe angeordnet ist, so dass dieser Innenbereich der Radfelge für die Bremse freigehalten werden muss. Besonders bei sportlichen oder schweren Fahrzeugen mit dementsprechend groß dimensionierten Bremsen ist daher der Platz für den radialen Anschluss der Radscheibe an das Tiefbett begrenzt.

Sind die Verbindungselemente im Bereich des schrägen Übergangs vom Tiefbett zum Hump des Felgenbetts angeordnet, ist durch die hiermit verbundene schräge Ausrichtung ihre mögliche Längenerstreckung durch die axiale Außenseite der Radscheibe bzw. der Speichen beschränkt.

Bei der alternativen Verwendung von Verbindungselementen mit größerem Querschnitt sind entsprechend größere Bohrungen bzw. Senkungen im Felgenbett nötig. Diese erzeugen jedoch eine größere Kerbwirkung im Felgenbett, wodurch die Festigkeit der Radfelge herabgesetzt wird.

In diesem Fall muss auch die Radscheibe bzw. die Speichen in Verbindungsbereich massiver ausgeführt werden, was entgegen der gestellten Leichtbau-Anforderungen zu einer massenungünstigen Kompaktheit der Radscheibe führt.

Zudem muss durch eine Anordnung der Verbindungselemente im Bereich des Übergangs vom Tiefbett zur Schulter das Tiefbett entsprechend des Querschnitts der Verbindungselemente und der damit verbundenen notwenigen Größe der Bohrungen und Anlageflächen ein tieferes Tiefbett ausgebildet werden, was jedoch entgegen dem Leichtbau-Interesse die Masse der Radfelge erhöht.

Ist die mögliche Größe der Verbindungselemente in irgendeiner Weise beschränkt, muss zur Gewährleistung der Sicherheit der Verbindung die Anzahl der notwendigen Verbindungselemente erhöht werden, was einerseits einen höheren Konstruktions- und Montageaufwand erfordert und andererseits wiederum die Massenbilanz des Fahrzeugrades verschlechtert.

Der Erfindung liegt deshalb die Aufgabe zugrunde, im Interesse der Leichtbauanforderungen an das Fahrzeugrad die mit der Verbindung übertragbaren Kräfte zu erhöhen und zugleich den Massenbedarf der Verbindung zwischen Radscheibe und Radfelge zu verringern und somit die Zuverlässigkeit und Haltbarkeit der Verbindung unter geringem Masseneinsatz zu verbessern.

Der Erfindung obliegt im Weiteren die Aufgabe ein Verfahren zur Herstellung eines derartigen Fahrzeugrades bereitzustellen, mit welchem die an das Fahrzeugrad gestellte Aufgabe mit geringem konstruktivem, verfahrenstechnischem und technologischem Aufwand erreicht wird.

Zur Lösung ist vorrichtungsseitig vorgesehen, dass das Durchgangsloch im Reifensitz des Felgenbetts angeordnet ist und das durch das Durchgangsloch geführte Verbindungselement im Wesentlichen in Richtung der radialen Erstreckung der felgeninnenseitig dem Reifensitz zugeordneten Radscheibe eingefügt ist.

Die Verbindung der Radscheibe mit der Radfelge ist im Bereich des Reifensitzes des Felgenbetts ausgebildet, der sich zwischen dem Felgenhorn und der Felgenschulter (Hump) erstreckt, wobei die im Wesentlichen radial erstreckte Radscheibe in Zuordnung zu diesem Bereich an der Felgeninnenseite der Radfelge angeschlossen ist.

Durch diese erfindungsgemäße Anordnung und Gestaltung der an der Verbindung beteiligten Bauteile, wird ein Bauraum für die Verbindung zur Verfügung gestellt, der eine Erhöhung der übertragbaren Kräfte pro Verbindungselement ermöglicht.

Insbesondere wird der nutzbare Bauraum für das Verbindungselement innerhalb der bis zum erhöhten Reifensitz radial erstreckten Radscheibe erweitert.

Die radiale oder nahezu radiale Ausrichtung des Verbindungselementes in Richtung der radialen Erstreckung der Radscheibe ermöglicht es, längere Verbindungselemente mit einem entsprechend größeren kraftübertragenden Längenabschnitt zur Erzielung einer größeren Wirklänge bzw. Fügelänge einzusetzen, was die Zuverlässigkeit und Haltbarkeit der Verbindung verbessert.

Das Verbindungselement kann vorzugsweise eine Schraube, ein Schraubbolzen, ein Gewindestab oder ein Niet (z.B. des Typs HI-LOK) sein und ggf. mit einem Senkkopf, Flachkopf oder Linsenkopf ausgestattet sein.

Bei der Verwendung von Schrauben als Verbindungselement können demnach größere Gewindelängen als nutzbare Wirklänge verwirklicht werden, wodurch die für die jeweilige Materialpaarung maximal mögliche Schraubenkraft auf die Verbindung aufgebracht werden kann. Durch die damit pro Verbindungselement höher übertragbaren Kräfte kann einerseits der Querschnitt der Verbindungselemente schlanker gestaltet werden und ggf. andererseits die Anzahl der für den Anschluss der Radscheibe insgesamt notwendigen Verbindungselemente reduziert werden.

Durch die schlankere Gestalt der Verbindungselemente bzw. auch durch die geringere Anzahl der Verbindungselemente werden die im Material des Felgenbetts eingebrachten Kerben verringert und die Festigkeit der Radfelge erhöht.

Im Ergebnis tragen die erfindungsgemäß gestalteten und angeordneten Verbindungselemente unter Gewährleistung der Sicherheitsanforderungen an die Verbindung zur Reduzierung der Masse des Fahrzeugrades bei.

Darüber hinaus kann die Geometrie des Tiefbetts freier gestaltet werden, da sie nicht von den Anforderungen der Verbindung mit der Radscheibe abhängig ist und insbesondere nicht an die Anordnung der Verbindungselemente angepasst sein muss, was zu einer weiteren Massenoptimierung an der Radfelge beitragen kann.

Die erfindungsgemäße Anordnung der an der Verbindung beteiligten Bauteile führt nicht zuletzt zu optisch ansprechenden großen Radscheiben, die weit außen an den Reifensitz heranreichen.

Infolge der erfindungsgemäßen Anordnung der Verbindung im Reifensitz kann gegenüber einem herkömmlichen Anschluss der Radscheibe an das Tiefbett zudem der Randbereich der Radscheibe bzw. die Enden der Speichen unaufgedickt und damit schlanker gestaltet sein, womit auch eine Massenverringerung der Radscheibe erreicht werden kann.

Der erfindungsgemäß zur Verfügung stehende längserstreckte Raum für die Verbindung ermöglicht nicht nur ein längeres Verbindungselement mit einer größeren Wirklänge bzw. Fügelänge vorzusehen, sondern auch mit einer größeren Dehnlänge. Die großzügig gestaltbare Gesamtlänge des Verbindungselements ermöglicht einen erheblich langen Schaftabschnitt des Verbindungselements, der für die Ausbildung einer hohen Dehnlänge bereitgestellt werden kann.

Die Dehnlänge beschreibt einen nicht unmittelbar an der Kraftübertragung beteiligten Schaftabschnitt des Verbindungselements jenseits des kraftübertragenden Abschnitts am Schaftende, der die Wirklänge bzw. Fügelänge ausmacht.

Die Erfindung geht dabei davon aus, dass mit steigender Dehnlänge des zur Kraftübertragung vorgespannten Verbindungselementes eine größere Längendehnung des Verbindungselementes erfolgen kann und damit der Einfluss von Setzerscheinungen, d. h. die plastische Verformung der an der Verbindung beteiligten Bauteile und -materialien, besser kompensiert werden kann.

Der zur Verfügung stehende längserstreckte Raum für die Ausbildung der Dehnlänge ermöglicht es, diese sehr flexibel an die bei der jeweiligen Verbindung zu erwartenden Setzerscheinungen, optimal anzupassen.

Dieser nicht unmittelbar an der Kraftübertragung beteiligte Schaftabschnitt des Verbindungselements kann vorzugsweise ein Vielfaches der Wirklänge des kraftübertragenden Abschnitts des Verbindungselements betragen.

Mit Zurverfügungstellung einer hohen Dehnlänge wird der Erhalt der Vorspannung des Verbindungselements während der zu erwartenden dynamischen Betriebslasten am Fahrzeugrad sichergestellt.

Letztlich wird hierdurch die Dauerfestigkeit der Verbindung unter dynamischen Wechselbelastungen, wie besonders bei den am Fahrzeugrad auftretenden hohen Wechsellastspielzahlen, verbessert. Somit wird die Zuverlässigkeit der Verbindung zwischen der Radfelge und der Radscheibe nachhaltig gewährleistet.

Erfindungsgemäß weist die Radscheibe ein mit dem Durchgangsloch des Felgenbetts korrespondierendes Sackloch auf. Das Sackloch weist einen sich an das Durchgangsloch anschließenden Aufnahmegang, durch den das Verbindungselement geführt ist, und einen nachfolgenden Fügegang, in welchem das Verbindungselement gefügt ist, auf.

Hierbei ist ein Schaftabschnitt des Verbindungselements sowohl im Durchgangsloch des Felgenbetts als auch in einem Aufnahmegang des Sackloches der Radscheibe lose erstreckt angeordnet, während das Schaftende, als endseitiger, kraftübertragende Schaftabschnitt mit einer bestimmten Wirklänge im Fügegang des Sackloches gefügt ist, welcher sich jenseits des Durchgangsloches an den Aufnahmegang anschließt.

Bei dieser Ausführungsform ist der kraftübertragende Abschnitt am Schaftende des Verbindungselementes zugunsten eines verlängerten, durch das Durchgangsloch des Felgenbetts und den Aufnahmegang geführten Schaftabschnittes, in einem vertieft gelegenen Fügegang mit der Radscheibe gefügt.

Diese Ausführung stellt den baulichen Raum in der Radscheibe für die Verbindung durch ein Verbindungselement mit einem besonders langen, von der unmittelbaren Kraftübertragung ausgenommenen Schaftabschnitt zur Verfügung, um eine hohe Dehnlänge verwirklichen zu können.

Bei der Verwendung einer Schraube oder eines Schraubbolzens als Verbindungselement ist vorgesehen, dass im Montagezustand ein glatter Schaftabschnitt im Durchgangsloch des Felgenbetts und dem Aufnahmegang angeordnet ist und das gewindetragende Schaftende der Schaube in ein Gewinde des vertieft gelegenen Fügegangs eingreift.

Vorzugsweise entspricht die für ein entsprechendes Verbindungselement bereitgestellte Länge des Aufnahmeganges mindestens der Länge des Fügeganges, vorzugsweise ein Vielfaches der Länge des Fügegangs. Dementsprechend wird der passende Bauraum für die Verwendung von Verbindungselementen zur Verfügung gestellt, deren freie Dehnlänge mindestens der Wirklänge ihres unmittelbar kraftübertragenden Abschnitts entspricht, insbesondere ein Vielfaches der Wirklänge beträgt.

Durch die dauerhaft zyklische Belastung des Fahrzeugrades ist die Verbindung zwischen Radfelge und Radscheibe besonders gefährdet vor Setz- und Kriecherscheinungen und einem damit verbundenen, selbständigen Lösen der Verbindung. Es hat sich bei der Erprobung an Kraftfahrzeugrädern gezeigt, dass Verbindungselemente mit einer freien Dehnlänge, die ein Vielfaches der ausgebildeten Wirklänge beträgt, besonders geeignet sind, die Gefahr des selbstständigen Lösens der Verbindung zu vermeiden.

Hierbei ist die zur optimalen Kraftübertragung erforderliche Wirklänge des Verbindungselements und damit der Fügegang der Radscheibe wiederum von deren Materialpaarung abhängig. Um beispielsweise die maximal mögliche Schraubenkraft einer Stahlschraube in einen Radstern aus Aluminiumguss einleiten zu können, muss die wirksame Gewindelänge (Wirklänge) der Stahlschraube mindestens dem 2,5-fachen des Schraubendurchmessers entsprechen.

Nach einer bevorzugten Ausführung beträgt die Dehnlänge des Verbindungselements ein Vielfaches des Durchmessers des Verbindungselements, vorzugsweise das 6-fache des Durchmessers des Verbindungselements.

Es hat sich in weiteren Erprobungen gezeigt, dass Verbindungselemente mit derartig ausgebildeten Eigenschaften vorteilhaft dazu beitragen, die Gefahr des selbstständigen Lösens der Verbindung auszuräumen.

In besonderen Einsatzfällen ist es vorteilhaft, wenn das Verbindungselement Teil einer Verbindungsanordnung ist, die wenigstens ein Buchsenteil aufweist, in welchem das Verbindungselement gelagert ist.

Weist die Verbindung der Radscheibe mit der Radfelge eine derartige Verbindungsanordnung mit einer ein- oder mehrteiligen Buchse auf, in der das Verbindungselement geführt ist, kann die erfindungsgemäße Verbindung vorteilhafter Weise für Leichtbau-Radfelgen mit einem Felgenbett aus gewichtssparendem Faserverbundwerkstoff, insbesondere aus kohlenstofffaserverstärktem Kunststoff, eingesetzt werden.

Ein Buchsensystem trennt das Verbindungselement und - ausführungsspezifisch - auch die Radscheibe vom Felgenbett aus Faserverbundwerkstoff. Dadurch werden die Relativbewegungen zwischen dem Felgenbett und dem Verbindungselement bzw. der Radscheibe entkoppelt, wodurch Schwingreibverschleiß am Faserverbundwerkstoff und ggf. auch Kontaktkorrosion zwischen der Radfelge aus Faserverbundwerkstoff und einer Radscheibe aus ande-rem Material vermieden werden kann. Zudem wird eine bessere Kompatibilität der unterschiedlichen Wärmeausdehnungen dieser Bauteile erreicht.

Mit der Ausführung des Verbindungselements als Teil einer Verbindungsanordnung werden die eingangs genannten Vorzüge bezüglich des besonders längserstreckten Verbindungselements ebenso erzielt.

Im Ergebnis wird die Zuverlässigkeit der Verbindung auch unter der Verwendung von Radfelgen aus Faserverbundmaterial erhöht.

Nach einer weiteren vorteilhaften Ausführungsform ist das Verbindungselement bzw. die Verbindungsanordnung in einer felgenaußenseitigen Ausnehmung des Durchgangsloches derart versenkt angeordnet, dass der Kopf des Verbindungselements und /oder ein felgenaußenseitiger Rand eines ggf. vorgesehenen Buchsenteils bündig mit der felgenaußenseitigen Kontur des Reifen-sitzes abschließt oder eine Vertiefung gegenüber der felgenaußenseitigen Kontur des Reifensitzes bildet.

In beiden Ausführungsvarianten bildet der Kopf oder der felgenaußenseitige Rand des Buchsenteils an keiner Stelle eine, über die äußere umlaufende, zylindrische Kontur des Reifensitzes überstehende Kontur.

Dadurch wird verhindert, dass das im Bereich des Reifensitzes in das Felgenbett integrierte Verbindungselement oder die dort integrierte Verbindungsanordnung den am Reifensitz platzierten Reifen behindert, so dass der Bauraum zum Aufziehen des Reifens beschädigungsfrei gesichert und auch nachfolgende Beschädigungen und vorzeitige Abnutzungen des Reifenmaterials während des Betriebes des Fahrzeugrades vermieden werden.

Vorzugsweise ist das Verbindungselement bzw. die Verbindungsanordnung felgenaußenseitig mit einem Dichtmittel bedeckt. Damit ist der Kopf des Verbindungselementes einschließlich eines felgenaußenseitigen Randes eines ggf. vorgesehenen Buchsenteils oberhalb des Durchgangsloches gegenüber der Reifenkammer abgedichtet. Das Dichtmittel kann eine elastische Dichtmasse, ein vorgeformtes Dichtelement oder eine Lackschicht sein.

Hierdurch wird eine zuverlässige Dichtung der Reifenkammer des Reifens gegenüber dem Durchgangsloch durch das Felgenbett hergestellt.

Vorzugsweise ist das Dichtmittel eine Lackschicht, welche beispielsweise auch für die Dichtung der felgenaußenseitigen Oberfläche eines Felgenbetts aus Faserverbundwerkstoff Verwendung findet. Hierdurch wird die Dichtung der Reifenkammer gegenüber dem Durchgangsloch mit geringem Aufwand in einem Arbeitsgang mit der Dichtung des Felgenbetts erzeugt. Zudem kann die Dichtung durch eine Lackschicht sehr zuverlässig und ohne nennenswerte Konturbeeinflussung ausgeführt werden kann.

In einer besonders vorteilhaften Ausführung ist das Dichtmittel als Füllung eines Hohlraums der felgenaußenseitigen Ausnehmung ausgebildet, der sich oberhalb des versenkt angeordneten Verbindungselementes bzw. oberhalb der versenkt angeordneten Verbindungsanordnung im Innenraum der Ausnehmung des Durchgangsloches ergibt.

Das Dichtmittel so ausgebildet, dass es den verbleibenden Hohlraum in der Ausnehmung ausfüllt und zugleich die äußere, umlaufende Kontur des Reifensitzes abbildet, womit der stetige zylindrische Konturenverlauf des Reifensitzes, der durch die Verbindungselemente bzw. durch die Verbindungsanordnungen punktuell unterbrochen ist, wieder vervollständigt ist.

Durch die wieder hergestellte ungestörte Kontur des Reifensitzes sind jegliche Unstetigkeiten im Reifensitz und partielle Hohlräume entlang Kontur des Reifensitzes vermieden, so dass der Reifen umlaufend konform und homogen am Reifensitz anliegt und damit eine umlaufende Dichtheit des Reifenrandes gegenüber der Radfelge und eine sichere und störungsfreie Kraftübertragung zwischen Reifen und Radfelge gewährleistet werden kann.

Alternativ ist das Verbindungselement bzw. die Verbindungsanordnung an die felgenaußenseitige Kontur des Reifensitzes angepasst ausgebildet, wodurch die vorstehend beschriebenen Vorteile des dichten und zuverlässigen Sitzes des Reifens im Reifensitz ebenso erzielt wird.

Insbesondere ist hierbei der Kopf eines versenkt angeordneten Verbindungselements bzw. ein felgenaußenseitiger Rand eines ggf. vorgesehenen Buchsenteils konturgetreu entsprechend der felgenaußenseitigen Kontur des Reifensitzes ausgebildet.

Bei in dieser Weise ausgebildeten Verbindungen ist die felgenaußenseitige Oberfläche der Verbindungselemente bzw. Verbindungsanordnungen optimal an die relativ schmale Kontur des Reifensitzes und dessen wulstige Randzone angepasst, so dass diese ohne nachteilige Konturbeeinflussung einen größeren Querschnitt aufweisen können. Damit wird - bezogen auf eine Verbindungstelle - die Übertragung größerer Kräfte ermöglicht, was eine Verringerung der Anzahl der benötigten Verbindungselemente bzw. Verbindungsanordnungen erlaubt, wodurch sich der Montageaufwand mindert und nicht zuletzt variablere Designmöglichkeiten für die anzuschließende Radscheibe ergeben.

Die an die felgenaußenseitige Kontur des Reifensitzes angepasst ausgebildeten Verbindungselemente bzw. Verbindungsanordnungen eignen sich für einen Überzug mit einer das Felgenbett in seiner Gesamtheit dichtenden Lackschicht, welche hierdurch mit geringem Aufwand und ohne Konturbeeinflussung auch zur Dichtung der Reifenkammer gegenüber dem Durchgangsloch ausgeführt werden kann.

Durch die erfindungsgemäße Ausführung der Verbindung der Radfelge mit der Radscheibe wird die Formgebung des Felgenbetts nur noch marginal durch die Größe und Gestaltung des Verbindungselementes bzw. der Verbindungsanordnung beeinflusst. Dadurch kann die Auslegung des Felgenbettes nahezu unabhängig vom verwendeten Verbindungselement bzw. von der verwendeten Verbindungsanordnung erfolgen, wodurch sich vielfältigere Designmöglichkeiten bei der Gestaltung des Felgenbettes ergeben. Die Auslegung des Felgenbetts muss weniger den Anforderungen der Verbindung folgen und kann daher beanspruchungsgerechter erfolgen, wodurch ein geringeres Gewicht des Fahrzeugrades erreicht werden kann.

Verfahrensseitig ist zur Lösung der Aufgabe vorgesehen, dass die Verbindung im Bereich des Reifensitzes des Felgenbetts hergestellt wird und nach dem Einfügen des Verbindungselements in die Radscheibe ein über die Kontur des Reifensitzes überstehender Abschnitt des Verbindungselements formgebend bearbeitet wird, so dass das Verbindungselement konturgetreu an die felgenaußenseitige Kontur des Reifensitzes angepasst wird.

Bei diesem Verfahren wird ein Teil des Verbindungselementes, wie zum Beispiel ein Teil des Kopfes des Verbindungselements, nach dem Herstellen der Verbindung durch nachträgliche Bearbeitung entfernt, ohne die Wirkung der Verbindung zu beeinträchtigen. Durch die bei der Bearbeitung des überstehenden Abschnitts erfolgende Anpassung an die Kontur des Reifensitzes wird ein weitestgehend stetiger Verlauf des Reifensitzes von der Felgenschulter über jedes der Verbindungselemente bis zum Felgenhorn und umlaufend um die zylindrische Umfangsflache des Reifensitzes erzeugt, in welchem die über den Umfang verteilt angeordneten Verbindungselemente im Wesentlichen konturkonform integriert sind.

Mit dieser Verfahrensweise ist das Verbindungselement weitestgehend unabhängig von seiner Größe in den schmalen Bereich des Reifensitzes integrierbar.

Die formgebende Bearbeitung des bereits montierten Verbindungselements in Anpassung an die umgebenden Konturgegebenheiten vereinfacht die Verfahrensschritte der Nachbereitung einer auf die Kontur des Reifensitzes abgestimmten Verbindungsstelle.

Außerdem erfolgt in dieser Verfahrensweise die Konturanpassung des Verbindungselements zuverlässiger und genauer, als z.B. durch eine vorgefertigte Kontur. Da die abzubildende felgenaußenseitige Kontur des Reifensitzes entlang des Drehwinkels des Verbindungselements veränderlich ist, würde eine am Verbindungselement vorgefertigte Kontur in nur wenigen Drehwinkelstellungen mit der umgebenden Kontur des Reifensitzes passend sein, was weniger praktikabel ausführbar ist.

Im Ergebnis des erfindungsgemäßen Verfahrens wird eine exakt an die felgenaußenseitige Kontur des Reifensitzes angepasste Verbindungsstelle hergestellt, die einen sicheren und dauerhaft dichten Sitz des Reifens auf der Radfelge gewährleistet.

Mit der Verfahrensausführung, bei dem das Verbindungselement als Teil einer Verbindungsanordnung vorgesehen ist und die nachträgliche, formgebende Bearbeitung eines über die felgenaußenseitige Kontur des Reifensitzes überstehenden Abschnitts der zusammengesetzten Verbindungsanordnung in Anpassung an die felgenaußenseitige Kontur des Reifensitzes erfolgt, werden die vorstehend genannten Vorzüge bezüglich der nachträglichen, formgebenden Bearbeitung des Verbindungselements ebenso erzielt.

Außerdem werden bei dieser Verfahrensausführung mehrere Teile gemeinsam, wie beispielsweise ein Kopf des Verbindungselements mit einem anderen Teil des felgenaußenseitig überstehenden Abschnitts der Verbindungsanordnung, wie zum Beispiel ein felgenaußenseitiger Rand eines Buchsenteils, in welchem das Verbindungselement gelagert wird, in einem einzigen Arbeitsgang formgebend bearbeitet, um die felgenaußenseitige Kontur des Reifensitzes übergreifend abzubilden.

Eine praktische Verfahrensweise sieht vor, dass das Verbindungselement bzw. die Verbindungsanordnung durch eine spanende Bearbeitung, vorzugsweise durch Drehen, Schleifen oder Fräsen, an die felgenaußenseitige Kontur des Reifensitzes angepasst wird.

Die spanende Bearbeitung eignet sich besonders gut in Anwendung an der rotationssymmetrischen Radfelge. Auf diese Weise können die überstehenden Abschnitte der Verbindungselemente bzw. die überstehenden Abschnitte der Verbindungsanordnungen mit geringem Aufwand umlaufend bearbeitet werden und mit besonders hoher Genauigkeit an die felgenaußenseitige Kontur des Reifensitzes angepasst werden, so dass im Ergebnis ein Fahrzeugrad mit einer hohen Dichtigkeit und Sicherheit des Reifensitzes gewährleistet werden kann.

In einer vorzugsweisen Ausführung des Verfahrens wird ein Abschnitt des Kopfes des Verbindungselements bzw. ein radial erweiterter Abschnitt der Verbindungsanordnung in eine formschlüssig korrespondierende Ausnehmung des Durchgangsloches eingefügt.

Der radial erweiterte Abschnitt der Verbindungsanordnung kann beispielsweise neben dem Senkkopf oder Flachkopf des Verbindungselements einen felgenaußenseitig erweiterten Rand eines Buchsenteils umfassen.

Nach dem Einfügen und der formgebenden Bearbeitung des Verbindungselements bzw. der Verbindungsanordnung verbleibt der eingelassene Abschnitt des Kopfes des Verbindungselements bzw. des radial erweiterten Randes der Verbindungsanordnung, sowohl formschlüssig als auch kraftschlüssig gesichert in der als Lager fungierenden Ausnehmung des Durchgangsloches.

Diese vorteilhafte Ausführung sichert trotz der materialminimierenden Bearbeitung des Verbindungselements bzw. der Verbindungsanordnung eine hohe kraftübertragende Wirkung der Verbindung, insbesondere die hohe Vorspannkraft des Verbindungselements unter der dynamischen Wechselbelastung des Fahrzeugrades und ist mit geringem technologischem Aufwand realisierbar.

Vorzugsweise wird das Verbindungselements bzw. die Verbindungsanordnung mit einer Hilfsgeometrie zum Fügen der Verbindung ausgebildet, welche derart angeordnet ist, dass sie bei der Bearbeitung des über der felgenaußenseitigen Kontur überstehenden Abschnitts des Verbindungselements bzw. der Verbindungsanordnung entfernt wird.

Eine derartige Hilfsgeometrie kann beispielsweise ein Steg, ein Schlitz, ein Innensechskant oder eine anders geformte In-bus-Ausnehmung im Kopf des Verbindungselementes oder eine Verzahnung im felgenaußenseitigen Rand eines Buchsenteils sein.

Diese Hilfsgeometrie befindet sich nach dem Einfügen des Verbindungselements bzw. der Verbindungsanordnung außerhalb der felgenaußenseitigen Kontur des Reifensitzes, so dass mit der formgebenden Bearbeitung des überstehenden Abschnitts des Verbindungselements bzw. der Verbindungsanordnung eine vollkommen konturenstetige Oberfläche des Verbindungselements bzw. der Verbindungsanordnung ohne verbleibende Vertiefungen erzielt wird.

Damit erübrigt sich ein Nacharbeiten bzw. Ausgleichen der Kontur des Verbindungselements bzw. der Verbindungsanordnung im Bereich der Hilfsgeometrie. Die Beseitigung der Hilfsgeometrie und die stetige, integrale Anpassung der Kontur an die felgenaußenseitige Kontur des Reifensitzes wird mit einem einzigen Arbeitsgang erreicht.

Insbesondere wird durch die Beseitigung der Hilfsgeometrie Querschnittseinschnürungen und Kerbwirkungen am Verbindungselement bzw. in der Verbindungsanordnung vermieden und damit die mit dem Verbindungselement bzw. der Verbindungsanordnung übertragbare Kraft erhöht, was bei gleichem Massenbedarf die Zuverlässigkeit und Haltbarkeit der Verbindung nachhaltig verbessert.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein.

Das erfindungsgemäße Fahrzeugrad und das erfindungsgemäße Verfahren zu dessen Herstellung werden in nachfolgenden Ausführungsbeispielen näher erläutert. Die zugehörigen Zeichnungen zeigen in einer schematischen Darstellung in
- Fig. 1: eine auszugsweise Schnittdarstellung eines erfindungsgemäßen Fahrzeugrades mit einer Radfelge und einem Radstern, die mittels eines Senkkopf- Schraubbolzens verbunden sind,
- Fig. 1a: ein vergrößerter Detailausschnitt X aus der Schnittdarstellung nach Fig. 1,
- Fig. 2: eine auszugsweise Schnittdarstellung des Fahrzeugrades nach Fig. 1 mit einem durch ein Dichtmittel abgedeckten Senkkopf-Schraubbolzen,
- Fig. 3: eine auszugsweise Schnittdarstellung eines erfindungsgemäßen Fahrzeugrades mit einer Radfelge und einem Radstern, die mittels einer Verbindungsanordnung aus einem Senkkopf-Schraubbolzen und einer zweiteiligen Buchse verbunden sind,
- Fig. 4: eine auszugsweise Schnittdarstellung eines ersten erfindungsgemäßen Verfahrensschrittes der Herstellung der Verbindung eines Fahrzeugrades mit einer Radfelge und einem Radstern mittels eines Senkkopf-Schraubbolzens,
- Fig. 5: eine auszugsweise Schnittdarstellung eines zweiten erfindungsgemäßen Verfahrensschrittes der Herstellung der Verbindung des Fahrzeugrades nach Fig. 4,
- Fig. 6: eine auszugsweise Schnittdarstellung eines ersten erfindungsgemäßen Verfahrensschrittes der Herstellung der Verbindung eines Fahrzeugrades mit einer Radfelge und einem Radstern mittels einer Verbindungsanordnung aus einem Senkkopf-Schraubbolzen und einer zweiteiligen Buchse,
- Fig. 7: eine auszugsweise Schnittdarstellung eines zweiten erfindungsgemäßen Verfahrensschrittes der Herstellung der Verbindung des Fahrzeugrades nach Fig. 6.

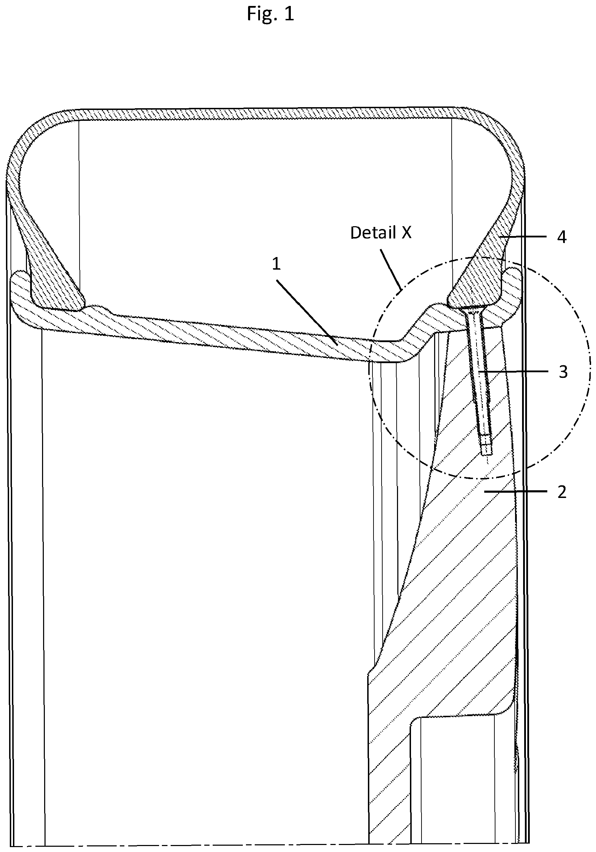

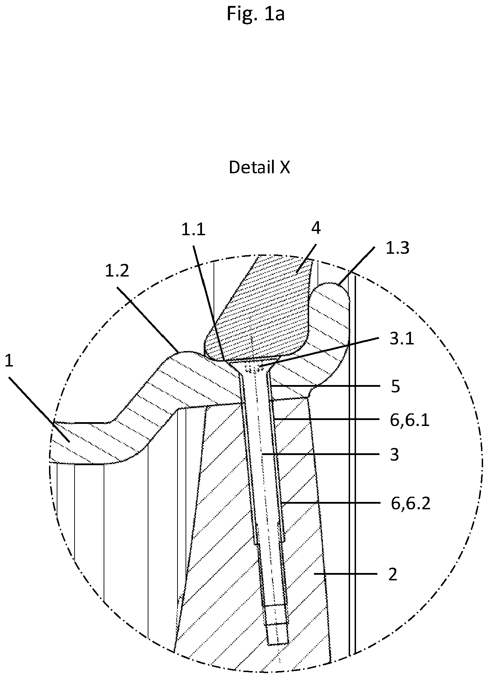

Das erste Ausführungsbeispiel der Erfindung zeigt m Fig. 1 eine Schnittansicht eines erfindungsgemäßen Fahrzeugrads mit einer Radfelge 1 und einem Radstern 2 aus Aluminium, welche mittels mehrerer um den Umfang der Radfelge 1 verteilt angeordneten Senkkopf-Schraubbolzen 3 aus Edelstahl verbunden sind. Die Schnittansicht zeigt den Schnitt durch das Fahrzeugrad entlang der Längsachse eines der durch das Felgenbett der Radfelge 1 geführten und im Radstern 2 gefügten Verbindungselemente 3.

Die Anbindung des Radsterns 2 an die Radfelge 1 erfolgt im Bereich eines Reifensitzes 1.1, der im Felgenbett der Radfelge 1 zwischen der Felgenschulter 1.2 (Hump) und dem Felgenhorn 1.3 für die Aufnahme eines Reifens 4 ausgebildet ist.

Die radiale Außenkontur des im Wesentlichen radial erstreckten Radsterns 2 ist an die felgeninnenseitige Kontur der Radfelge 1 jenseits des Reifensitzes 1.1 angepasst, so dass sich der Radstern 2 im montierten Zustand gegen die Radfelge 1 im Bereich des Reifensitzes 1.1 abstützt.

Dementsprechend sind die für die Durchführung der Senkkopf-Schraubbolzen 3 vorgesehenen Durchgangslöcher 5 im Reifensitzes 1.1 des Felgenbetts und im Wesentlichen radial gerichtet ausgebildet. Felgenaußenseitig weist jedes Durchgangsloch 5 eine konisch geweitete Ausnehmung (Senkloch) zur Aufnahme des Senkkopfes 3.1 des Schraubbolzens 3 auf.

Jedes Durchgangsloch 5 durch den Reifensitz 1.1 korrespondiert mit jeweils einem langerstrecktem Sackloch 6, welches sich im Wesentlich radial gerichtet tief in das langerstreckte Speichenende des Radsterns 2 erstreckt. Das Sackloch 6 weist in einem oberen Abschnitt einen Aufnahmegang 6.1 und in einem tieferliegendem, unteren Abschnitt einen Fügegang 6.2 mit einen Innengewinde auf. Der Senkkopf-Schraubbolzen 3 ist mit seinem langerstreckten, glattem Schaftabschnitt durch das Durchgangsloch 4 und durch den Aufnahmegang 6.1 des Sackloches 6 geführt und greift mit dem Außengewinde seines Schaftendes in das Innengewinde des Fügegangs 6.2 des Sackloches 6 ein. Die ineinandergreifende Gewindelänge stellt die Wirklänge für die Kraftübertragung durch den Senkkopf-Schraubbolzens 3 zur Verfügung. Der langerstreckte, gewindefreie Schaftabschnitt des Senkkopf-Schraubbolzens 3 dient dazu, eine hohe Dehnlänge bei der Kraftaufnahme durch die Schraube 3 bereit zu stellen. Um mit dem Senkkopf-Schraubbolzen 3 die maximal mögliche Kraft in den Radstern 2 aus Aluminium einleiten zu können, beträgt die Gewindelänge des in den Fügegang 6.2 des Sackloches 6 eingreifenden Schaftendes mindestens das 2,5-fache des Schraubendurchmessers. Der gewindefreie, obere Schaftabschnitt des Senkkopf-Schraubbolzen 3 ist in diesem Ausführungsbeispiel ca. doppelt so groß wie die Gewindelänge des Schaftendes.

Der zur Verfügung stehende längserstreckte Raum im Speichenende des Radsterns 2 ermöglicht besonders lange Verbindungselemente 3 in den entsprechenden vorteilhaften Verhältnissen von Wirklänge und Dehnlänge einzusetzen.

Der Senkkopf-Schraubbolzen 3 weist zum Einschrauben in den Radstern 2 einen Innensechskant im Senkkopf 3.1 auf. Wie genauer aus der vergrößerten Detailansicht X in Fig. la ersichtlich ist, ist der Senkkopf 3.1 des Schraubbolzens 3 im verschraubten Zustand im Senkloch des Felgenbetts so versenkt angeordnet, dass der ebene Senkkopf 3.1 an keiner Stelle die umlaufend gekrümmte Felgenaußenseite des Reifensitzes 1.1 überragt.

Dies ist bereits dadurch gewährleistet, dass der senkrecht zur Bildebene und in tangentialer Richtung der zylindrischen Umfangsfläche des Felgenbetts orientierte Rand des ebenen Senkkopfes 3.1 bündig zu der sich hier anschließenden Umfangsfläche des Reifensitzes 1.1 verläuft. Hierdurch ergibt sich geometrisch, dass die Oberfläche des ebenen Senkkopfs 3.1 achsnah tiefer als die felgenaußenseitige Kontur des Reifensitzes 1.1 liegt, wie in Fig. 1a ersichtlich.

Der Senkkopf 3.1 kann im verschraubten Zustand des Schraubbolzens 3 jedoch auch derart im Senkloch des Felgenbetts versenkt angeordnet sein, dass der ebene Senkkopf 3.1 eine vollständige Vertiefung gegenüber der gekrümmten Felgenaußenseite des Reifensitzes 1.1 bildet.

In beiden Fällen wird eine überstehende Kontur des Senkkopfes 3.1 über der Felgenaußenseite des Reifensitzes 1.1 verhindert, so dass keine Grate oder Kanten in den Bauraum des aufgezogenen Reifens ragen und mithin der Reifen 4 bei seiner Platzierung im Reifensitz nicht behindert oder beschädigt wird.

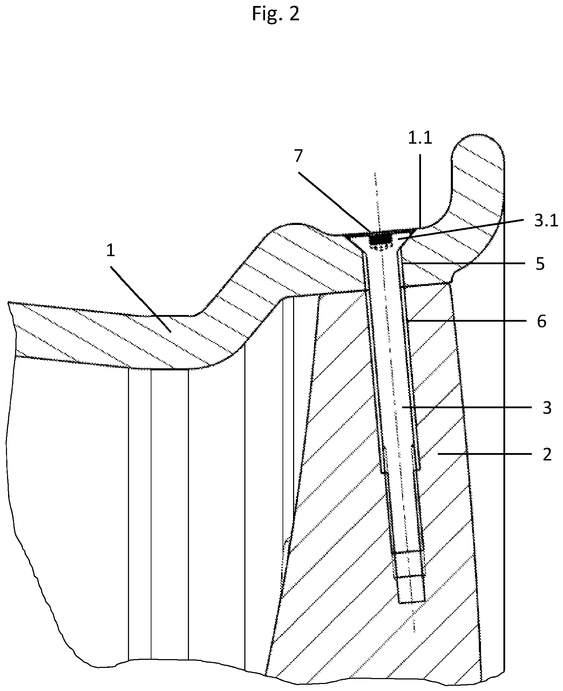

Die Ausführung nach Fig. 2 zeigt das Fahrzeugrad nach Fig. 1, bei dem der im Senkloch des Felgenbetts versenkt angeordnete Senkkopf 3.1 des Senkkopf-Schraubbolzens 3 mit einer elastischen Dichtmasse 7 als Dichtmittel bedeckt ist.

Zur besseren Illustration ist der Reifen 4 hier nicht dargestellt. Die Abdeckung durch die Dichtmasse 7 erfolgt im Ausführungsbeispiel so, dass der verbleibende Hohlraum des Senklochs oberhalb des Senkkopfes 3.1 vollständig ausgefüllt ist, wobei die äußere Oberfläche der Füllung durch die Dichtmasse 7 mit einer gekrümmten Kontur versehen ist, welche partiell der äußeren zylindrischen Kontur des Reifensitzes 1.1 entspricht und damit die felgenaußenseitige Kontur des Reifensitzes stetig vervollständigt.

Somit bleiben die bestehenden Verbindungen im Reifensitz 1.1 auch während des Betriebes des Fahrzeugrades ohne jeglichen nachteiligen Einfluss - sowohl auf die Dichtung des Reifens 4 gegenüber der Radfelge 1 als auch auf die Kraftübertragung zwischen Reifen 4 und Radfelge 1.

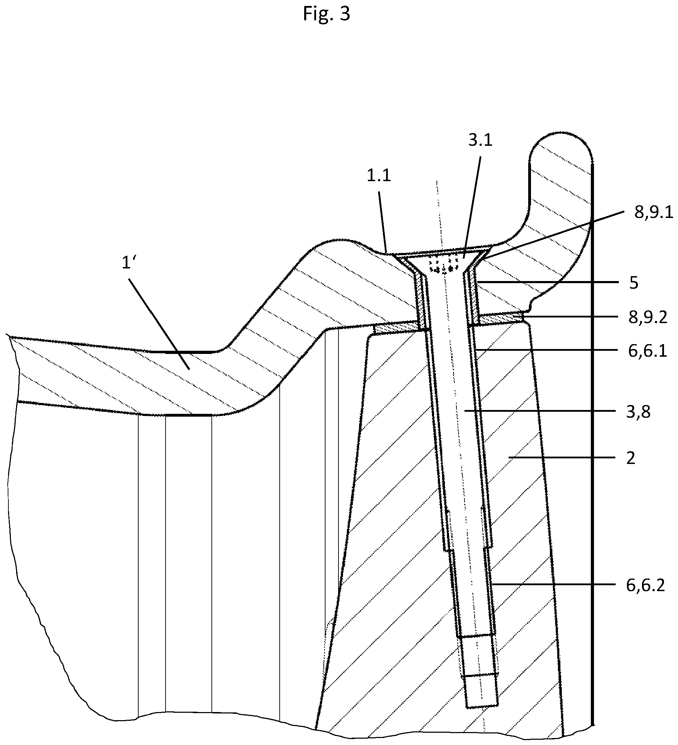

Das Ausführungsbeispiel der Erfindung nach Fig. 3 betrifft ein erfindungsgemäßes Fahrzeugrad ähnlich dem Fahrzeugrad nach Fig. 1, wobei eine Radfelge 1', dessen Felgenbett aus Faserverbundwerkstoff besteht, mit einem Radstern 2 aus Aluminium verbunden ist.

Nachfolgend sollen lediglich die Unterschiede gegenüber dem Ausführungsbeispiel nach Fig. 1 beschrieben werden. Gleiche Funktionsteile haben dieselben Bezugszeichen.

Zur Anbindung des Radsterns 2 an die Radfelge 1' aus Faserverbundwerkstoff ist eine zusammengesetzte Verbindungsanordnung 8 vorgesehen, welche eine zweiteilige Buchse 9 aus Edelstahl aufweist, in der der Senkkopf-Schraubbolzen 3 als Verbindungselement geführt ist.

Das in dem Durchgangsloch 5 angeordnete erste Buchsenteil 9.1 weist felgenaußenseitig einen konisch geweiteten Randbereich auf, der mit der konisch geweiteten Ausnehmung (Senkloch) des Durchgangsloches 5 korrespondiert und außerdem korrespondierend zum Senkkopf 3.1 ausgebildet ist. Es ragt felgeninnenseitig über den Felgenbettquerschnitt hinaus.

Das zweite Buchsenteil 9.2 umfasst das felgeninnenseitig überragende erste Buchsenteil 9.1 und liegt an der Felgeninnenseite der Radfelge 1' an.

Die Buchsenteile 9.1, 9.2 schaffen somit eine günstige Trennung des Senkkopf-Schraubbolzens 3 und des Radsterns 2 vom Felgenbett der Radfelge 1', welche das Faserverbundmaterial des Felgenbetts u. a. vor unerwünschtem Schwingreibverschleiß schützt.

Der Senkkopf-Schraubbolzen 3 ist durch das erste und zweite Buchsenteil 9.1, 9.2 hindurch in das radial erstreckte Sackloch 6 hinein geführt und greift mit dem Außengewinde seines Schaftendes in das Innenwinde des Fügegangs 6.2 des Sackloches 6 ein.

Im verschraubten Zustand ist die radiale Außenkontur des Radsterns 2 fest an den zugewandten Anlagenflächen des ersten und zweiten Buchsenteils 9.1, 9.2 angepresst, während der Senkkopf 3.1 am konisch geweiteten Randbereich des ersten Buchsenteils 9.1 anliegt.

Analog zur Ausführung nach Fig. 1 ist im verschraubten Zustand auch der Randbereich des ersten Buchsenteils 9.1 der Verbindungsanordnung 8 im gleicher Weise wie der Senkkopf 3.1 des Schraubbolzens 3 im Senkloch des Felgenbetts versenkt angeordnet, so dass dieser Randbereich zumindest in tangentialer Richtung der zylindrischen Umfangsfläche des Felgenbetts bündig mit der Felgenaußenseite des Reifensitzes 1.1 abschließt.

Hierdurch ergibt sich rein geometrisch, dass sowohl die ebene Oberfläche des Senkkopfs 3.1 des Schraubbolzens 3 als auch der ebene Randbereich des ersten Buchsenteils 9.1 in der gezeigten Schnittebene tiefer als die zylindrische, felgenaußenseitige Kontur des Reifensitzes 1.1 liegt, wie in Fig. 3 ersichtlich.

Alternativ kann im verschraubten Zustand der Senkkopf 3.1 des Schraubbolzens 3 und der Randbereich des ersten Buchsenteils 9.1 auch derart im Senkloch des Felgenbetts versenkt angeordnet sein, dass neben dem Senkkopf 3.1 auch der gesamte umlaufende Radbereich des ersten Buchsenteils 9.1 vollständig eine Vertiefung gegenüber der Felgenaußenseite des Reifensitzes 1.1 bildet.

Hierdurch wird in jedem Fall eine überstehende Kontur des Senkkopfes 3.1 sowie des Randbereichs des ersten Buchsenteils 9.1 über der Felgenaußenseite des Reifensitzes 1.1 verhindert, so dass keine Grate oder Kanten in den Bauraum des (hier nicht dargestellten) Reifens 4 ragen und mithin der Reifen 4 bei seiner Platzierung im Reifensitz 1.1 nicht behindert oder beschädigt wird.

Bei dieser Ausführung kann analog der Ausführung nach Fig. 2 die im Senkloch des Felgenbetts versenkt angeordnete Verbindungsanordnung 8 mit einem Dichtmittel 7 abgedeckt werden, und zwar vorzugsweise so, dass das Senkloch oberhalb des Senkkopfes 3.1 des Schraubbolzens 3 und des felgenaußenseitigen Randbereiches des ersten Buchsenteils 9.1 vollständig mit dem Dichtmittel 7 ausgefüllt ist und die äußere Oberfläche des Dichtmittels 7 die äußere zylindrische Kontur des Reifensitzes 1.1 partiell vervollständigt (nicht dargestellt).

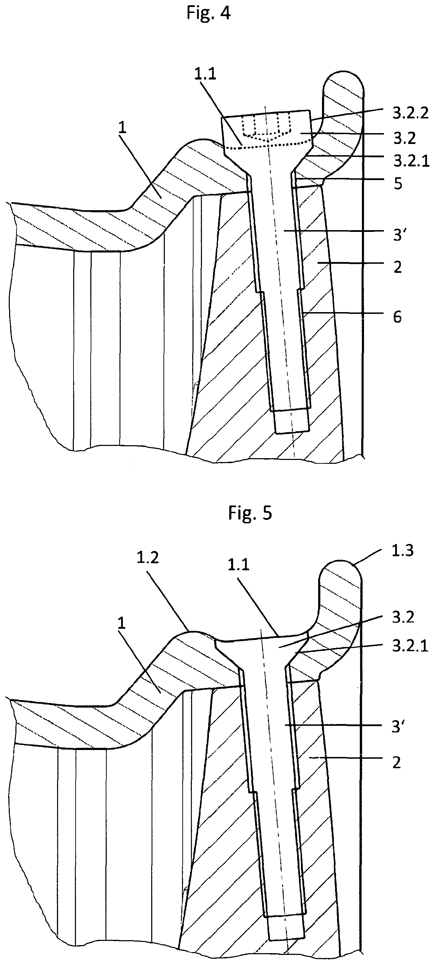

Die Figuren 4 und 5 beschreiben ein erfindungsgemäßes Verfahren der Herstellung eines Fahrzeugrades, ähnlich dem Fahrzeugrad nach Fig. 1, mit einer Verbindung einer Radfelge 1 und eines Radsterns 2 aus Aluminium im Bereich des Reifensitzes 1.1 der Radfelge 1.

Gleiche Funktionsteile werden mit identischen Bezugszeichen bezeichnet.

Fig. 4 zeigt in einer Momentaufnahme einen ersten erfindungsgemäßen Verfahrensschritt der Herstellung dieser Verbindung.

Als Verbindungselemente werden Schraubbolzen 3' aus Edelstahl mit einem großformatigem, kombinierten Flach-Senkkopf 3.2 verwendet, die jeweils neben einem unteren, konisch geformten Senkkopf-Abschnitt 3.2.1 einen oberen, zylindrisch geformten Flachkopf-Abschnitt 3.2.2 aufweisen, wobei im letztgenannten Abschnitt 3.2.2 ein Innensechskant als Montagehilfe ausgebildet ist. Die Schnittdarstellungen in den Fig. 4 und 5 zeigen einen der Schraubbolzen 3' stellvertretend für die Gesamtzahl der im Bereich des Reifensitzes 1.1 um den Umfang der Radfelge 1 gefügten Schraubbolzen 3'.

Der Schraubbolzen 3' ist im Verfahrensschritt nach Fig. 4 bereits durch das im Reifensitz 1.1 ausgebildete Durchgangsloch 5 gesteckt und in ein korrespondierendes, im Wesentlichen radial gerichtetes, längserstrecktes Sackloch 6 des Radstern 2 eingeschraubt, wobei der Schraubbolzen 3' mittels eines nicht dargestellten Werkzeuges, welches in den Innensechskant des kombinierten Flach-Senkkopfs 3.2 eingreift, festgezogen wird.

Mit dem Verschrauben aller Schraubbolzen 3' wird die radiale Außenkontur des Radsterns 2 fest an die felgeninnenseitige Kontur der Radfelge 1 angefügt.

Das Durchgangsloch 5 durch das Felgenbett weist felgenaußenseitig eine zur Form des unteren Senkkopf-Abschnitts 3.2.1 korrespondierende konisch geweitete Ausnehmung (Senkloch) auf, in welcher der Flach-Senkkopf 3.2 des Schraubbolzens 3' beim Verschrauben eingelassen wird, bis der konisch geformte Senkkopf-Abschnitt 3.2.1 plan an der konisch geweiteten Ausnehmung anliegt. Ein Großteil des Flachkopf-Abschnitts 3.2.2 verbleibt im verschraubten Zustand des Schraubbolzens 3' oberhalb der felgenaußenseitige Kontur des Reifensitzes 1.1 und bildet einen Überstandsabschnitt des kombinierten Flach-Senkkopfes 3.2.

Fig. 5 zeigt in einer Momentaufnahme einen zweiten Verfahrensschritt der Herstellung der Verbindung des Fahrzeugrads nach Fig. 4. In diesem nachfolgenden Verfahrensschritt wurde der Überstandsabschnitt des kombinierten Flach-Senkkopfs 3.2 durch eine spanende Bearbeitung mit beispielsweise einem Fräswerkzeug, entfernt. Der Überstandsabschnitt wird so bearbeitet, dass der verbleibende, in der Ausnehmung des Durchgangsloches 5 eingelassene Abschnitt des Flach-Senkkopfes 3.2, der im Wesentlichen aus dem Senkkopf-Abschnitt 3.2.1 besteht, konturgetreu an die felgenaußenseitige Kontur des Reifensitzes 1.1 angepasst ist.

Mit der Nachbearbeitung des Flach-Senkkopfes 3.2 wird gleichzeitig und ohne weiteres Zutun der Innensechskant des Flach-Senkkopfs 3.2 mit entfernt, da dessen ausnehmende Geometrie zweckgemäß in dem über die felgenaußenseitige Kontur des Reifensitzes überstehenden Flachkopf-Abschnitt 3.2.2 platziert ist.

Durch diese Nachbearbeitung des Flach-Senkkopfes 3.2 wird ein vollständig stetiger Verlauf des Reifensitzes 1.1 von der Felgenschulter 1.2 bis zum Felgenhorn 1.3 und umlaufend um die zylindrische Umfangsflache der Radfelge 1 erzeugt, in der der bearbeitete Flach-Senkkopf-Schraubbolzen 3' ohne jegliche Konturen-Unstetigkeiten integriert ist. Damit wird ein von den im Reifensitz 1.1 angeordneten Verbindungen ungestörter, optimal anliegender, und gegenüber der Reifenkammer dichter Sitz des (hier nicht dargestellten) Reifens 4 auf der Radfelge 1 erzielt.

In einem nicht dargestellten dritten Verfahrensschritt kann die bearbeitete Oberfläche des Flach-Senkkopfes 3.2 und die felgenaußenseitige Kontur des Reifensitzes 1.1 zur Dichtung des Felgenbetts und der Durchgangslöcher 5 durchgehend mit einer dünnen Lackschicht überzogen werden.

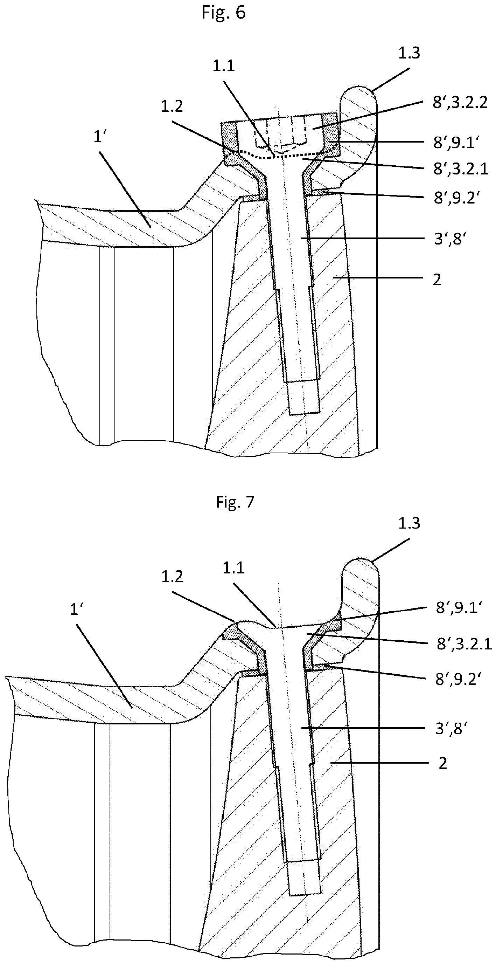

Die Figuren 6 und 7 beschreiben ein zweites erfindungsgemäßes Verfahren der Herstellung eines Fahrzeugrades, ähnlich dem Fahrzeugrad nach Fig. 3, mit einer Verbindung einer Radfelge 1' aus Faserverbundwerkstoff und eines Radsterns 2 aus Aluminium im Bereich des Reifensitzes 1.1 der Radfelge 1.

Gleiche Funktionsteile werden mit identischen Bezugszeichen bezeichnet.

Fig. 6 zeigt eine Momentaufnahme eines ersten erfindungsgemäßen Verfahrensschritts zur Herstellung dieser Verbindung.

Die Radfelge 1' und die Radstern 2 werden im Unterschied zum Verfahren nach den Fig. 4 und 5 mittels mehrerer, im Reifensitz 1.1 und um den Umfang der Radfelge 1' angeordneten Verbindungsanordnungen 8' verbunden, die jeweils aus einem Flach- Senkkopf-Schraubbolzen 3' gemäß der Ausführung nach Fig. 4 und einer zweiteiligen Buchse 9' aus Edelstahl bestehen.

Das im Durchgangsloch 5 des Reifensitzes 1.1 angeordnete großformatige erste Buchsenteil 9.1' verfügt felgenaußenseitig neben einem konisch geweiteten Bereich über einen zylindrisch geweiteten Randbereich, welche im Einbauzustand den konisch geformten Senkkopf-Abschnitt 3.2.1 bzw. den zylindrisch geformten Flachkopf-Abschnitt 3.2.2 des Flach-Senkkopfes 3.2 vollständig aufnehmen.

Zur Einbettung des stufig geweiteten, ersten Buchsenteils 9.1' in das Durchgangsloch 5 weist dieses felgenaußenseitig eine zur äußeren Form des ersten Buchsenteils 9.1' korrespondierende stufig konisch und zylindrisch geweitete Ausnehmung auf, die aufgrund des Umfangs des Buchsenteils 9.1' bis in die Felgenschulter 1.2 und an den Fuß des Felgenhorns 1.3 reicht.

Durch den erheblich großen Außenquerschnitt des zylindrischen Abschnitts des Buchsenteil 9.1' wird eine große Auflagefläche des Buchsenteils 9.1' bereitgestellt, wodurch die auf den Faserverbundwerkstoff des Felgenbetts einwirkende Flächenpressung infolge der Schraubenlängskraft des Schraubbolzen 3' günstig verringert wird.

Ein zweites Buchsenteil 9.2' umgibt das erste Buchsenteil 9.1' felgeninnenseitig. Die Buchsenteile 9.1', 9.2' fassen das Durchgangsloch 5 zum Schutz des Felgenbetts aus Faserverbund-Werkstoff vollständig ein.

Der Schraubbolzen 3' ist im Verfahrensschritt nach Fig. 6 bereits durch das erste und zweite Buchsenteil 9.1', 9.2' im Durchgangsloch 5 gesteckt und in das korrespondierende, längserstreckte Sackloch 6 des Radsterns 2 eingeschraubt, wobei der Schraubbolzen 3' mittels eines nicht dargestellten Werkzeuges, welches in den Innensechskant des kombinierten Flach-Senkkopfs 3.2 eingreift, festgezogen wird.

Mit dem Verschrauben aller Schraubbolzen 3' wird die radiale Außenkontur des Radsterns 2 fest an die zugewandten Anlageflächen der Buchsenteile 9.1', 9.2' angepresst und jeweils der Flach-Senkkopf 3.2 in den konisch geweiteten und zylindrisch geweiteten Randbereich des ersten Buchsenteils 9.1' eingelassen.

Im Wesentlichen verbleibt der Flachkopf-Abschnitts 3.2.2 des Schraubbolzens 3' und ein Großteil des zylindrisch geweiteten Randbereichs des ersten Buchsenteils 9.1' im verschraubten Zustand des Schraubbolzens 3' oberhalb der felgenaußenseitige Kontur des Reifensitzes 1.1 und bildet einen Überstandsabschnitt der Verbindungsanordnung 8'.

Fig. 7 zeigt in einer Momentaufnahme den zweiten, nachfolgenden Verfahrensschritt der Herstellung der Verbindung des Fahrzeugrads nach Fig. 6, bei dem der Überstandsabschnitt der Verbindungsanordnung 8', respektive der Flachkopf-Abschnitt 3.2.2 mit dem zylindrisch geweiteten Randbereich des ersten Buchsenteils 9.1', mit einem spanenden Werkzeug entfernt und so formgebend bearbeitet wurde, dass der verbleibende, in der Ausnehmung des Durchgangsloches 5 eingelassene Abschnitt der Verbindungsanordnung 8', im Wesentlichen bestehend aus dem Senkkopf-Abschnitt 3.2.1 und dem konisch geweiteten Randbereich des ersten Buchsenteils 9.1' konturgetreu an die felgenaußenseitige Kontur des Reifensitzes 1.1 angepasst ist. Lediglich ein geringer Rest des zylindrisch geweiteten Randbereiches des ersten Buchsenteils 9.1' verbleibt bei der spanenden Bearbeitung und bietet einerseits eine großzügige Auflagefläche zur Kompensation der Flächenpressung und ist andererseits konturgetreu und damit weitestgehend unabhängig vom Platzangebot an die felgenaußenseitige Kontur des Reifensitzes 1.1 und an die sich anschließende, felgenaußenseitige Kontur der Felgenschulter 1.2 und des Felgenhornes 1.3 angepasst.

Da der Innensechskant des Flach-Senkkopfs 3.2 im Überstandabschnitt außerhalb der Kontur des Reifensitzes 1.1 angeordnet ist, wird dieser bei der Bearbeitung des Flach-Senkkopfes 3.2 mit entfernt.

Im Ergebnis wird ein vollständig stetiger Verlauf des Reifensitzes 1.1 von der Felgenschulter 1.2 bis zum Felgenhorn 1.3 und umlaufend um die zylindrische Umfangsfläche des Reifensitzes geschaffen, in der die felgenaußenseitig angrenzende Verbindungsanordnung 8' aus Flach-Senkkopf-Schraubbolzen 3 und zweiteilige Buchse 9' ohne jegliche Konturen-Unstetigkeiten integriert ist.

Damit wird ein von den im Reifensitz 1.1 angeordneten mehrteiligen Verbindungsanordnungen ungestörter, optimal anliegender, und gegenüber der Reifenkammer dichter Sitz des (hier nicht dargestellten) Reifens 4 auf der Radfelge 1 erzielt.

In einem nicht dargestellten dritten Verfahrensschritt kann zum Zwecke der Dichtung des Felgenbetts und der Durchgangslöcher 5 die bearbeitete Oberfläche der Verbindungsanordnung 8', respektive die Oberfläche des verbliebenen der Flachkopf-Abschnitt 3.2.2 des Flach-Senkkopfes 3.2 und des zylindrisch geweiteten Randbereichs des ersten Buchsenteils 9.1', sowie die felgenaußenseitige Kontur des Reifensitzes 1.1 durchgehend mit einer dünnen Lackschicht überzogen werden.

### Bezugszeichenliste

- 1: Radfelge
- 1.1: Reifensitz
- 1.2: Felgenschulter
- 1.3: Felgenhorn
- 2: Radscheibe, Radstern
- 3: Verbindungselement, Senkkopf-Schraubbolzen, Flach-Senkkopf-Schraubbolzen
- 3.1: Senkkopf des Schraubbolzens
- 3.2: Flach-Senkkopf des Schraubbolzens
- 3.2.1: Senkkopfabschnitt des Flach-Senkkopf
- 3.2.2: Flachkopfabschnitt des Flach-Senkkopf
- 4: Reifen
- 5: Durchgangsloch
- 6: Sackloch
- 6.1: Aufnahmegang des Sackloches
- 6.2: Fügegang des Sackloches
- 7: Dichtmittel, elastische Dichtmasse
- 8: Verbindungsanordnung
- 9: zweiteilige Buchse
- 9.1: erstes Buchsenteil
- 9.2: zweites Buchsenteil

## Patentansprüche

1. Fahrzeugrad mit einer Radfelge (1) und einer an einer Felgeninnenseite der Radfelge angeschlossenen Radscheibe (2), wobei die Radscheibe (2) mittels wenigstens eines Verbindungselements (3) mit der Radfelge (1) verbunden ist, welches durch ein Durchgangsloch (5) des Felgenbetts geführt und in der Radscheibe (2) eingefügt ist, wobei das Durchgangsloch (5) im Reifensitz (1.1) des Felgenbetts angeordnet ist und das durchgeführte Verbindungselement (3) im Wesentlichen in Richtung der radialen Erstreckung der felgeninnenseitig dem Reifensitz (1.1) zugeordneten Radscheibe (2) gefügt ist, **dadurch gekennzeichnet, dass** die Radscheibe (2) ein mit dem Durchgangsloch (5) des Felgenbetts korrespondierendes Sackloch (6) aufweist, welches einen Aufnahmegang (6.1), durch den das Verbindungselement (3) geführt ist, und einen Fügegang (6.2), in welchem das Verbindungselement (3) gefügt ist, aufweist.

2. Fahrzeugrad nach Anspruch 1,
**dadurch gekennzeichnet, dass**
die für ein entsprechendes Verbindungselement (3) bereitgestellte Länge des Aufnahmeganges (6.1) mindestens der Länge des Fügeganges (6.2), vorzugsweise ein Vielfaches der Länge des Fügegangs (6.2), entspricht.

3. Fahrzeugrad nach einem der Ansprüche 1 oder 2,
**dadurch gekennzeichnet, dass**
die Dehnlänge des Verbindungselements (3) ein Vielfaches des Durchmessers des Verbindungselements (3), vorzugsweise das 6-fache des Durchmessers des Verbindungselements (3) beträgt.

4. Fahrzeugrad nach einem der vorstehenden Ansprüche,
**dadurch gekennzeichnet, dass**
das Verbindungselement (3) Teil einer Verbindungsanordnung (8) ist, die wenigstens ein Buchsenteil (9.1, 9.2) aufweist, in welchem das Verbindungselement (3) gelagert ist.

5. Fahrzeugrad nach einem der vorstehenden Ansprüche
**dadurch gekennzeichnet, dass**
das Verbindungselement (3) bzw. die Verbindungsanordnung (8) in einer felgenaußenseitigen Ausnehmung des Durchgangsloches (5) derart versenkt angeordnet ist, dass der Kopf (3.1) des Verbindungselements (3) und / oder ein felgenaußenseitiger Rand eines Buchsenteils (9.1) bündig mit der felgenaußenseitigen Kontur des Reifensitzes (1.1) abschließt oder eine Vertiefung gegenüber der felgen-außenseitigen Kontur des Reifensitzes (1.1) bildet.

6. Fahrzeugrad nach einem der vorstehenden Ansprüche,
**dadurch gekennzeichnet, dass** das
Verbindungselement (3) bzw. die Verbindungsanordnung (8) felgenaußenseitig mit einem Dichtmittel (7) bedeckt ist.

7. Fahrzeugrad nach Anspruch 6,
**dadurch gekennzeichnet, dass**
das Dichtmittel (7) eine Lackschicht ist.

8. Fahrzeugrad nach Anspruch 6 oder 7,
**dadurch gekennzeichnet, dass**
das Dichtmittel (7) als Füllung eines Hohlraums der felgenaußenseitigen Ausnehmung des Durchgangsloches (5) ausgebildet ist.

9. Fahrzeugrad nach einem der vorstehenden Ansprüche,
**dadurch gekennzeichnet, dass**
das Verbindungselement (3) bzw. die Verbindungsanordnung (8) an die felgenaußenseitige Kontur des Reifensitzes (1.1) angepasst ausgebildet ist.

10. Verfahren zur Herstellung eines Fahrzeugrads nach einem der vorhergehenden Ansprüche mit einer Verbindung zwischen einer Radfelge und einer an einer Felgeninnenseite der Radfelge angeschlossene Radscheibe, bei der die Radscheibe mittels wenigstens eines Verbindungselements, welches durch ein Durchgangsloch des Felgenbetts geführt und in der Radscheibe gefügt wird, mit der Radfelge verbunden wird,
**dadurch gekennzeichnet, dass**
die Verbindung im Bereich des Reifensitzes (1.1) des Felgenbetts hergestellt wird und nach dem Fugen des Verbindungselements (3) in der Radscheibe (2) ein über die felgenaußenseitige Kontur des Reifensitzes (1.1) überstehender Abschnitt des Verbindungselements (3) formgebend bearbeitet wird, so dass das Verbindungselement (3) konturgetreu an die felgenaußenseitige Kontur des Reifensitzes (1.1) angepasst wird.

11. Verfahren nach Anspruch 10,
**dadurch gekennzeichnet, dass**
das Verbindungselement (3) Teil einer Verbindungsanordnung (8) ist und nach dem Fügen der Verbindungsanordnung (8) in der Radfelge (1) bzw. Radscheibe (2) ein über die felgenaußenseitige Kontur des Reifensitzes (1.1) überstehender Abschnitt der Verbindungsanordnung (8) formgebend bearbeitet wird, so dass die Verbindungsanordnung (8) konturgetreu an die felgenaußenseitige Kontur des Reifensitzes (1.1) angepasst wird.

12. Verfahren nach einem der Ansprüche 10 oder 11,
**dadurch gekennzeichnet, dass**
das Verbindungselement (3) bzw. die Verbindungsanordnung (8) durch eine spanende Bearbeitung, vorzugsweise durch Drehen, Schleifen oder Fräsen, an die felgenaußenseitige Kontur des Reifensitzes (1.1) angepasst wird.

13. Verfahren nach einem der Ansprüche 10 bis 12,
**dadurch gekennzeichnet, dass**
ein Abschnitt des Kopfes (3.2) des Verbindungselements (3) bzw. ein radial erweiterter Abschnitt der Verbindungsanordnung (8) in eine formschlüssig korrespondierende Ausnehmung des Durchgangsloches (5) eingelassen wird.

14. Verfahren nach einem der Ansprüche 10 bis 13,
**dadurch gekennzeichnet, dass**
das Verbindungselement (3) bzw. die Verbindungsanordnung (8) mit einer Hilfsgeometrie zum Fügen der Verbindung ausgebildet wird, welche derart angeordnet ist, dass sie während der Bearbeitung des über der felgenaußenseitigen Kontur überstehenden Abschnitts des Verbindungselements (3) bzw. der Verbindungsanordnung (8) entfernt wird.

## Claims

1. Vehicle wheel with a wheel rim 1) and a wheel disc connected to an inner rim of the wheel rim (2), wherein the wheel disc (2) is connected to the wheel rim (1) by at least one connecting element (3), which is guided through a through hole (5) of the rim well and inserted in the wheel disc (2), wherein the through hole (5) is arranged in the tyre seat (1.1) of the rim well and the guided-through connecting element (3) is essentially joined in the direction of the radial extension of the wheel disc (2) assigned to the tyre seat (1.1) on the inner-rim side, **characterized in that** the wheel disc (2) comprises a blind hole (6) corresponding to the through hole (5) of the rim well, which comprises a receiving passage (6.1), through which the connecting element (3) is guided, and a joining passage (6.2), within which the connecting element (3) is joined.

2. Vehicle wheel according to Claim 1,
**characterized in that**
the length of the receiving passage (6.1) provided for a corresponding connecting element (3) corresponds to at least the length of the joining passage (6.2), preferably corresponding to a multiple of the length of the joining passage (6.2).

3. Vehicle wheel according to any one of the Claims 1 or 2,
**characterized in that** the elongation length of the connecting element (3) is a multiple of the diameter of the connecting element (3), preferably being six times the diameter of the connecting element (3).

4. Vehicle wheel according to any one of the preceding claims,
**characterized in that**
the connecting element (3) is part of a connecting assembly (8) which comprises at least one bushing part (9.1, 9.2), within which the connecting element (3) is seated.

5. Vehicle wheel according to any one of the preceding claims
**characterized in that**
the connecting element (3) or the connecting assembly (8) is arranged in a countersunk manner with an outer-rim-side recess of the through hole (5) in such a way
that the head (3.1) of the connecting element (3) and/or an outer-rim-side edge of a bushing part (9.1) is flush with the outer-rim-side contour of the tyre seat (1.1) or forms a recess opposite the outer-rim-side contour of the tyre seat (1.1).

6. Vehicle wheel according to any one of the preceding claims,
**characterized in that** the connecting element (3) or the connecting assembly (8) is covered with a sealant (7) on the outer-rim side.

7. Vehicle wheel according to Claim 6,
**characterized in that**
the sealant (7) is a lacquer coating.

8. Vehicle wheel according to Claim 6 or 7,
**characterized in that**
the sealant (7) is designed as the filling of a cavity of the outer-rim-side recess of the through hole (5).

9. Vehicle wheel according to any one of the preceding claims,
**characterized in that**
the connecting element (3) or the connecting assembly (8) is formed adapted to the outer-rim-side contour of the tyre seat (1.1).

10. Method for the production of a vehicle wheel according to any one of the preceding claims with a connection between a wheel rim and a wheel disc connected to an inner-rim side of the wheel rim, in which the wheel disc is connected to the wheel rim by at least one connecting element, which is guided through a through hole of the rim well and joined in the wheel disc,
**characterized in that**
the connection is established in the region of the tyre seat (1.1) of the rim well and, after the jointing of the connecting element (3) in the wheel disc (2), a section of the connecting element (3) protruding over the outer-rim-side contour of the tyre seat (1.1) is machined in a shaping manner in such a way that the connecting element (3) is adapted to precisely match the outer-rim-side contour of the tyre seat (1.1).

11. Method according to Claim 10,
**characterized in that**
the connecting element (3) is part of a connecting assembly (8) and, after joining the connecting assembly (8) in the wheel rim (1) or wheel disc (2), a section of the connecting assembly (8) protruding over the outer-rim-side contour of the tyre seat (1.1) is machined in a shaping manner in such a way that the connecting assembly (8) is adapted to precisely match the outer-rim-side contour of the tyre seat (1.1).

12. Method according to any one of the Claims 10 or 11,
**characterized in that**
the connecting element (3) or the connecting assembly (8) is adapted to the outer-rim-side contour of the tyre seat (1.1) via a machining process, preferably by means of turning, grinding or milling.

13. Method according to any one of the Claims 10 to 12,
**characterized in that**
a section of the head (3.2) of the connecting element (3) or a radially extended section of the connection assembly connecting assembly (8) is inserted into a corresponding recess of the through hole (5) in a positive-locking manner.

14. Method according to any one of the Claims 10 to 13,
**characterized in that**
the connecting element (3) or the connecting assembly (8) is formed with an auxiliary geometry for joining the connection, which is arranged in such a way that it is removed during the machining of the section of the connecting element (3) or the connecting assembly (8) protruding over the outer-rim-side contour.

## Revendications

1. Roue de véhicule, dotée d'une jante de roue (1) et d'un disque de roue (2) raccordé sur un côté intérieur de jante de la jante de roue, le disque de roue (2) étant assemblé avec la jante de roue (1) au moyen d'au moins un élément d'assemblage (3), lequel est guidé à travers un trou de passage (5) de la base de jante et est inséré dans le disque de roue (2), le trou de passage (5) étant placé dans l'assise du pneu (1.1) de la base de jante et l'élément d'assemblage (3) enfilé à travers étant joint sensiblement en direction de l'extension radiale du disque de roue (2) associé sur le côté intérieur de la jante à l'assise du pneu (1.1), **caractérisée en ce que** le disque de roue (2) comporte un trou borgne (6) correspondant avec le trou de passage (5) de la base de jante, lequel comporte un couloir de réception (6.1), à travers lequel l'élément d'assemblage (3) est guidé, et un couloir de jonction (6.2), dans lequel l'élément d'assemblage (3) est joint.

2. Roue de véhicule selon la revendication 1,
**caractérisée en ce que**
la longueur du couloir de réception (6.1) mise à disposition pour un élément d'assemblage (3) correspondant correspond au moins à la longueur du couloir de jonction (6.2), de préférence à un multiple de la longueur du couloir de jonction (6.2).

3. Roue de véhicule selon l'une quelconque des revendications 1 ou 2, **caractérisée en ce que** la longueur de dilatation de l'élément d'assemblage (3) s'élève à un multiple du diamètre de l'élément d'assemblage (3), de préférence à 6 fois le diamètre de l'élément d'assemblage (3).

4. Roue de véhicule selon l'une quelconque des revendications précédentes,
**caractérisée en ce que**
l'élément d'assemblage (3) est une partie d'un ensemble d'assemblage (8), qui comporte au moins une partie femelle (9.1, 9.2) dans laquelle est logé l'élément d'assemblage (3).

5. Roue de véhicule selon l'une quelconque des revendications précédentes,
**caractérisée en ce que**
l'élément d'assemblage (3) ou l'ensemble d'assemblage (8) est placé en étant noyé dans un évidement ménagé côté extérieur de la jante du trou de passage (5) de telle sorte
**que** la tête (3.1) de l'élément d'assemblage (3) et / ou un bord côté extérieur de la jante d'une partie femelle (9.1) se termine à fleur du contour côté extérieur de la jante de l'assise du pneu (1.1) ou forme un creux par rapport au contour côté extérieur de la jante de l'assise du pneu (1.1).

6. Roue de véhicule selon l'une quelconque des revendications précédentes,
**caractérisée en ce que**
l'élément d'assemblage (3) ou l'ensemble d'assemblage (8) est recouvert du côté extérieur de la jante avec un moyen d'étanchéité (7).

7. Roue de véhicule selon la revendication 6,
**caractérisée en ce que**
le moyen d'étanchéité (7) est une couche de laque.

8. Roue de véhicule selon la revendication 6 ou 7,
**caractérisée en ce que**
le moyen d'étanchéité (7) est conçu sous la forme d'un remplissage d'une cavité de l'évidement du côté extérieur de la jante du trou de passage (5).

9. Roue de véhicule selon l'une quelconque des revendications précédentes,
**caractérisée en ce que**
l'élément d'assemblage (3) ou l'ensemble d'assemblage (8) est conçu en étant adapté au contour côté extérieur de la jante de l'assise du pneu (1.1).

10. Procédé, destiné à fabriquer une roue de véhicule selon l'une quelconque des revendications précédentes, dotée d'un assemblage entre une jante de roue et un disque de roue raccordé sur le côté intérieur de jante de la jante de roue, lors duquel on assemble avec la jante de roue le disque de roue au moyen d'au moins un élément d'assemblage, que l'on guide à travers un trou de passage de la base de jante et que l'on joint dans le disque de roue,
**caractérisé en ce que**
l'on établit l'assemblage dans la zone de l'assise du pneu (1.1) de la base de jante et après le jointage de l'élément d'assemblage (3) dans le disque de roue (2), l'on usine par façonnage un segment de l'élément d'assemblage (3) débordant au-delà du contour du côté extérieur de la jante de l'assise du pneu (1.1), de sorte qu'il soit adapté conformément au contour du contour du côté extérieur de la jante de l'assise du pneu (1.1).

11. Procédé selon la revendication 10,
**caractérisé en ce que**
l'élément d'assemblage (3) est une partie d'un ensemble d'assemblage (8) et après le jointage de l'ensemble d'assemblage (8) dans la jante de roue (1) ou dans le disque de roue (2), l'on usine par façonnage un segment de l'ensemble d'assemblage (8) débordant au-delà du contour du côté extérieur de la jante de l'assise du pneu (1.1), de sorte que l'ensemble d'assemblage (8) soit adapté conformément au contour du contour du côté extérieur de la jante de l'assise du pneu (1.1).

12. Procédé selon l'une quelconque des revendications 10 ou 11,
**caractérisé en ce que**
l'on adapte l'élément d'assemblage (3) ou l'ensemble d'assemblage (8) par un usinage par enlèvement de copeaux, de préférence par tournage, affûtage ou fraisage, au contour du côté extérieur de la jante de l'assise du pneu (1. 1).

13. Procédé selon l'une quelconque des revendications 10 à 12,
**caractérisé en ce que**
l'on engage un segment de la tête (3.2) de l'élément d'assemblage (3) ou un segment élargi en direction radiale de l'ensemble d'assemblage (8) dans un évidement correspondant par complémentarité de forme du trou de passage (5).

14. Procédé selon l'une quelconque des revendications 10 à 13,
**caractérisé en ce que**
l'on conçoit l'élément d'assemblage (3) ou l'ensemble d'assemblage (8) avec une géométrie auxiliaire pour le jointage de l'assemblage, laquelle est placée de sorte à être retirée pendant l'usinage du segment de l'élément d'assemblage (3) débordant au-delà du contour du côté extérieur de la jante de l'élément d'assemblage (3) ou de l'ensemble d'assemblage (8).
